# EUROPEAN PATENT APPLICATION

(11) **EP 2 717 433 A1**
(43) Date of publication of application: **09.04.2014**
(21) Application number: 12187410.1
(22) Date of filing: 05.10.2012
(51) Int. Cl.: H02K 3/12, H02K 3/28, H02K 17/24, H02K 17/42

(54) **Rotor structure and electrical machine**

(71) Applicant: ABB Oy, 00380 Helsinki (FI)
(72) Inventor: Lepa, Erko, 00380 Helsinki (FI)
(74) Representative: Kolster Oy Ab

(57) **Abstract**

Rotor of a wound rotor induction machine comprising multiple-phase wave windings comprising three or more winding branches in each phase. In the rotor at least two winding branches of each phase are connected in parallel and at least one branch in series with the parallel-connected branches.

## Description

### FIELD OF THE INVENTION

The present invention relates wound rotor induction machines, and more particularly to rotor windings of such machines.

### BACKGROUND OF THE INVENTION

Wound rotor induction machines are electrical rotating machines in which the rotor comprises windings. One type of such a machine is a double-fed induction machine, which is commonly used as a generator (DFIG). The most common type of double-fed induction machine rotor has a two-layer, bar-type winding owing to the practicality and simplicity of this winding type. Bar-type winding simplifies the manufacture, allows better utilization of the slot space owing to a decrease in the quantity of insulation and tolerates centrifugal forces that appear at high rotation speeds.

The basic theory of this winding type is treated in the literature. However, the dimensioning of the open-circuit voltage is not covered extensively. The dimensioning of open-circuit voltage is not treaded in literature since traditionally it has been considered that as long as the open circuit voltage does not exceed the insulation voltage threshold value, the value of the open circuit voltage is not that important.

When double-fed induction machines are operated with frequency converters that control the slip of the machine, the correctly and accurately dimensioned open-circuit voltage plays an important role in dimensioning the complete drive system.

The rotor voltage of a double-fed induction generator (DFIG) follows a V-shaped curve that can be considered proportional to slip. The rotor voltage is at zero when the rotor is in synchronism with the stator voltage and the slip is thus zero. When the slip is increased or decreased, the rotor voltage changes linearly. The open circuit voltage corresponds to a voltage generated in the rotor windings when the rotor is not rotating or is rotating twice at its nominal speed (i.e. slip is either -1 or 1). The slip of DFIG can typically vary from -30% to 30% (corresponding to rotational speed range of 1000...2000 rpm when rated speed is 1500 rpm). A typical value for open-circuit voltage is 1800 V in a megawatt class DFIG.

The dimensioning of the open circuit voltage is important in that the voltage of the rotor is in the specified range when the rotational speed (slip) of the rotor changes within the allowable limits. As mentioned above, the voltage of the rotor increases when the slip is increased from zero or decreased from zero, and it reaches its highest allowable value when the slip is at its highest allowable value. As the change of rotor voltage is linear with respect to the slip, the correctly set open-circuit voltage assures that the rotor voltage at the highest slip is at a specified value. The rotor voltage at the highest slip also defines the size of the frequency converter used in the control of the rotor. Thus, the open circuit voltage has to be dimensioned in such a manner that the voltage at the highest slip can be operated by using a frequency converter. This means that the rating of the frequency converter sets at least some design boundaries for dimensioning the open circuit voltage of the double-fed induction machine rotor.

A typical range of open-circuit voltage is 1800 V to 2200 V with a relatively small tolerance for a high powered DFIG. When other limitations relating to rotor current, machine losses and slot combinations are taken into account, the open-circuit voltage requirement is not easily met by using traditional design approaches.

Design approaches commonly used for dimensioning the open-circuit voltage include changing the number of slots occupying the windings. Traditional two-layer winding usually has one winding turn (or coil) per one slot. For increasing the open circuit voltage, the number of slots is increased. This method is very effective but it is limited by many other factors. For example fractional winding cannot be used, the ratio between stator and rotor windings must be close to 1.25 in order to avoid undesirable radial forces, teeth must tolerate mechanical loads and the coil-end length must be as short as possible.

Another approach for dimensioning the open-circuit voltage is to use star or delta connection in rotor winding. The rotor voltage is theoretically changed by a factor of 1.73 by changing the connection type.

Further, the open-circuit voltage may be dimensioned by using designs in which the number of rotor bars in a slot is changed. The most common bar structures are two bars in one slot or four bars in one slot. An increase in the number of bars in a slot increases the number of effective turns in the winding, and thereby increases the open-circuit voltage.

### BRIEF DESCRIPTION OF THE INVENTION

An object of the present invention is to provide a rotor winding structure so as to overcome the above problems. The object of the invention is achieved by a rotor which is characterized by what is stated in the independent claim. The preferred embodiments of the invention are disclosed in the dependent claims.

The invention is based on the idea of connecting the rotor winding in such a way that at least two winding branches of each phase are connected in parallel. The windings of a wave winding comprise winding branches which form a known part of the total winding and traditionally the branches are connected in series for forming the total winding. In wave windings one criterion of the winding is that the number of bars in a rotor slot is even. The parallel-connected winding branches make the rotor act as if the number of bars in a rotor slot was odd, typically one or three.

An advantage of the invention is that the dimensioning of a wound rotor induction machine is easier with respect to open-circuit voltage. The structure of the invention gives the designer of the machine more options in achieving required electrical properties. Some embodiments of the invention further help in saving material costs, since the cross-sectional area of the rotor bars can be made smaller than in the prior art rotors.

### BRIEF DESCRIPTION OF THE DRAWINGS

In the following the invention will be described in greater detail by means of preferred embodiments with reference to the accompanying drawings, in which
Figure 1 shows end connections of an embodiment with star connection,
Figure 2 shows end connections of an embodiment with delta connection,
Figure 3 shows bars in rotor slots of the embodiments of Figure 1 and 2,
Figure 4 shows end connections of an embodiment,
Figure 5 shows bars in rotor slots of the embodiment of Figure 4,
Figure 6 shows first two layers of a winding of an embodiment,
Figure 7 shows last two layers of a winding of an embodiment,
Figure 8 shows end connections of the embodiment of Figures 6
   and 7, and
Figure 9 shows bars in rotor slots of the embodiments of Figures 6 and 7.

### DETAILED DESCRIPTION OF THE INVENTION

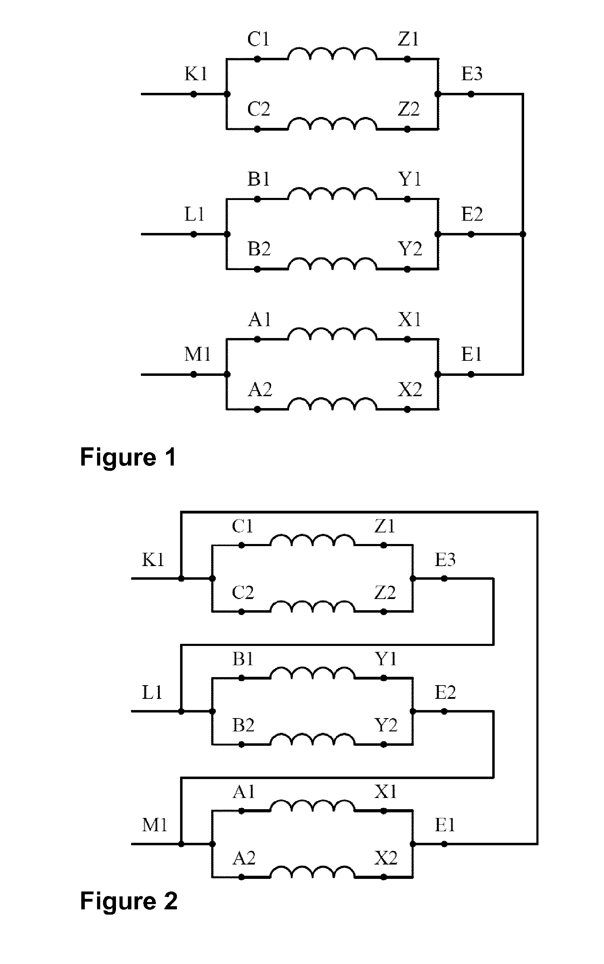

Figure 1 shows end connections of an embodiment of the present invention. In this embodiment each phase winding of the three-phase rotor consists of two branches. The inputs to the phases are marked M1, L1 and K1 and the M phase consists of branches A1-X1 and A2-X2. Figure 1 further shows an end connection point E1 of the M phase. The L phase comprises branches B1-Y1 and B2-Y2 and an end connection point E2 while the K phase has branches C1-Z1 and C2-Z2 and an end connection point E3. In Figure 1 the end connection points E1, E2 and E3 are connected together so that the phases are connected in star connection. The embodiment of Figure 2 differs from the embodiment of Figure 1 in that the phases are connected in delta connection.

According to the present disclosure, at least two winding branches of each phase are connected in parallel. As seen in Figures 1 and 2, the branches of each phase are connected in parallel. The winding system forms a double-layer winding and the advantage of the structure is that the winding works as if the rotor had only one bar in slot, i.e. a single-layer winding. The winding of the embodiment is, however, easier to manufacture compared to a normal single-layer winding. The use of the winding of the embodiments of Figures 1 and 2 gives the designer of the machine new possibilities. The star or delta connection may also be selected according to the desired voltage level.

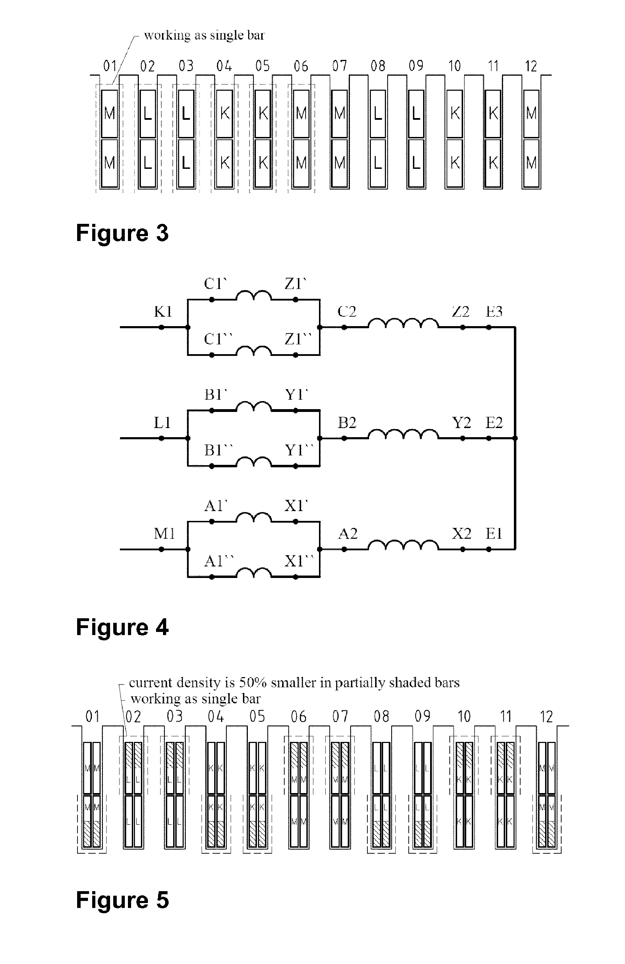

Figure 3 shows bars in slots of the embodiment of Figures 1 and 2. In Figure 3 each phase occupies two consecutive slots and each slot has two bars. Figure 3 also shows markings K, L, M indicating the phase of the bar.

Figure 4 shows an embodiment of the present invention in which each phase consists of four branches. Two of these four branches are connected in parallel and the two other branches are connected in series with the parallel connection. The M phase of the windings consists of parallel connection of branches A1'-X1' and A1"-X1" and series connection of two branches A2-X2. The endpoints of each phase winding are connected together and form a star-connected winding system. Phases L and K are formed in a similar manner as phase M.

The structure of Figure 4 forms a winding with equivalent three bars in a slot although physically the structure uses four bars in a slot. This is due to the parallel connection in which the current is divided into two branches. The divided section operates as a single bar in a slot and the remaining two bars operate as normal two different bars in a slot.

Figure 5 shows the bars in the slot of the embodiment of Figure 4. In Figure 5, the bars are arranged two side by side and two on top of each other. As the current is divided between two parallel branches, the current density is smaller in the parallel branches if all the bars are of the same cross-sectional area. This is shown in Figure 5 as shaded areas in each slot. The branches connected in parallel can be made of material having a smaller cross section. This requires special laminations or other structures in the rotor slots in order for the winding to be balanced. Further, in two layer windings the upper surface of the bottom layer should be levelled so that the upper layer can be physically manufactured. Figure 5 also shows markings K, L, M indicating the phase of the bar.

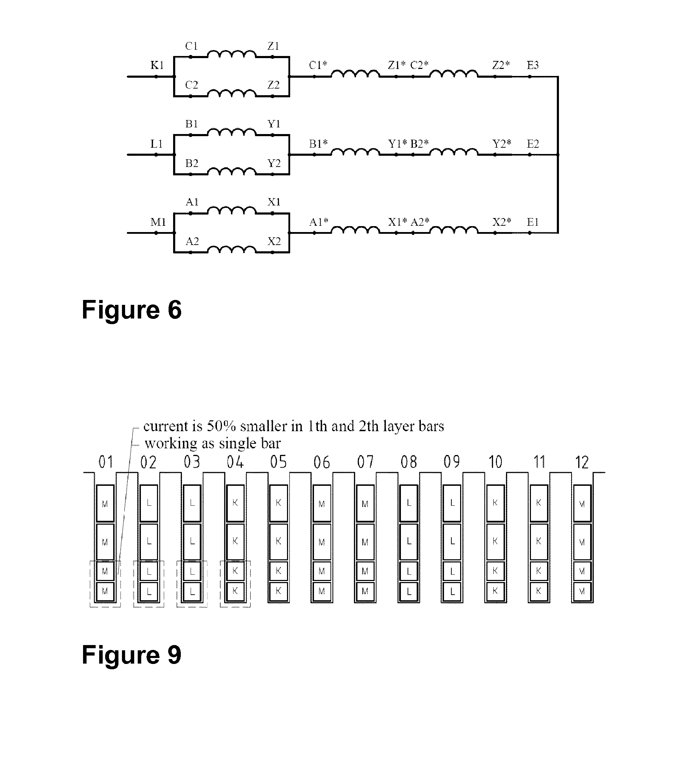

Figure 6 shows end connections of an embodiment of the invention. The embodiment of Figure 6 is electrically similar to that of Figure 4. In Figure 6 the series-connected branches are shown as separate branches. Phase M consists of parallel-connected branches A1-X1, A2-X2 and branches A1*-X1* and A2*-X2* connected in series with the parallel-connected branches. The other phases L and K are formed similarly and the end points of each phase E1, E2, E3 are connected together for forming a star-connected winding system.

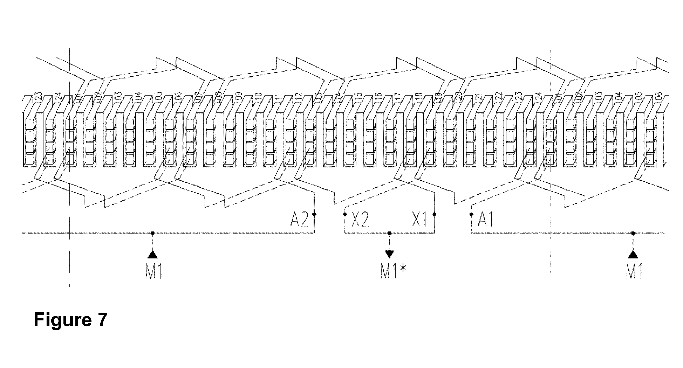

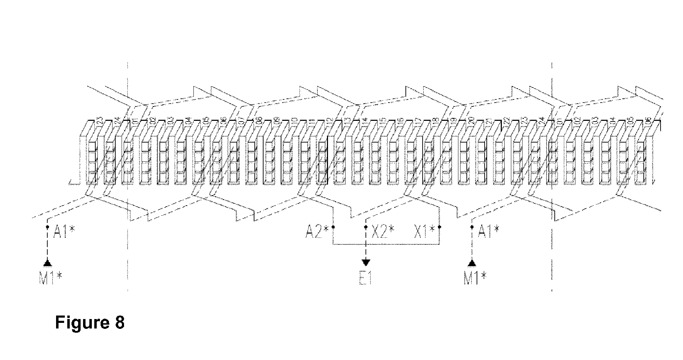

Figures 7 and 8 illustrate the winding phase M of the embodiment of Figure 6. Figure 7 shows first two layers of an embodiment in which the bars are situated on top of each other. The first two layers are formed of the parallel-connected branches. As explained in connection with Figure 4, the currents in the parallel branches are divided in two, i.e. both of the parallel connected branches carry one half of the phase current. When the bars in slots are arranged on top of each other, the cross section of the parallel bars can be made smaller. In fact, the cross sectional area can be arranged to be half of the cross sectional areas of the branches that are not connected in parallel.

When the bars are arranged on top of each other, the bars of the parallel-connected branches can be made smaller in cross-sectional area. The winding shown in Figure 7 shows how the top surface of the windings is even so that no additional fillers are required as in connection with Figure 5. It should also be noted that the winding system of Figure 7 is similar to that of Figures 1 and 2.

Figure 8 shows the third and fourth layers of the winding system. The third and fourth layers are the series-connected branches A1*-X1* and A2*-X2*. The winding system shown is a typical wave winding in which two branches are connected in series. For completing the phase winding, the windings of Figures 7 and 8 are connected together such that connection points M1* are connected to each other. This leaves phase input M1 and the end of winding E1 unconnected. The other phases correspond to the one shown.

Figure 9 shows the bars in the slot of the above embodiment. As illustrated, the two lowermost bars are of a smaller cross-sectional area than the two uppermost bars. As can be understood from Figure 9, the rotor of the embodiment acts as a rotor with three bars in one slot, which gives additional design options to the designer of the rotor and the machine in which the rotor is used. Figure 9 also shows markings K, L, M indicating the phase of the bar.

In the above the invention is described mostly in connection with a rotor of a double-fed induction machine. The rotor structure of the invention is a wound rotor structure and the structure is not limited to a specific kind of machine.

The present invention also relates to an electrical machine, such as a motor or generator, having the rotor structure of the invention. Such a machine is typically a double-fed induction generator with slip rings. However, the electrical machine having the rotor of the present disclosure may also be a motor for driving a load.

It will be obvious to a person skilled in the art that, as the technology advances, the inventive concept can be implemented in various ways. The invention and its embodiments are not limited to the examples described above but may vary within the scope of the claims.

## Claims

1. Rotor of a wound rotor induction machine comprising multiple-phase wave windings comprising three or more winding branches in each phase, **characterized in that**
at least two winding branches of each phase are connected in parallel and at least one branch in series with the parallel-connected branches.

2. Rotor according to claim 1, **characterized in that** the winding is a double-layer wave winding.

3. Rotor according to claim 1, **characterized in that** each phase of the winding comprises four winding branches of which two branches are connected in parallel.

4. Rotor according to claim 3, **characterized in that** the parallel-connected winding branches are connected in series with the two other winding branches.

5. Rotor according to claim 3 or 4, **characterized in that** the rotor winding comprises four bars in each rotor slot, arranged on top of each other.

6. Rotor according to claim 3, 4 or 5, **characterized in that** the parallel-connected branches are adapted to form the first two layers of the windings.

7. Rotor according to any of the claims 3 - 6, **characterized in that** each of the parallel-connected branches are adapted to carry half of the rotor current of one phase.

8. Rotor according to any of the claims 3 - 7, **characterized in that** the cross-sectional area of the parallel-connected winding branches is smaller than the cross-sectional area of the other branches of the same phase.

9. Rotor according to claim 3 or 4, **characterized in that** the rotor comprises four bars in each rotor slot, arranged two side by side and two on top of each other.

10. Rotor according to any of the claims 1 - 9, **characterized in that** the rotor is a rotor of a double-fed induction machine.

11. Electrical machine comprising a rotor structure according to any of the previous claims 1 - 10.
